# EUROPEAN PATENT APPLICATION

(11) **EP 4 640 294 A1**
(43) Date of publication of application: **29.10.2025**
(21) Application number: 25190529.5
(22) Date of filing: 14.03.2022
(51) Int. Cl.: B01D 27/08, B01D 35/30

(54) **FILTER HOUSING FOR SPIN-ON OR BOWL CARTRIDGE ASSEMBLIES**

(30) Priority: 16.03.2021 US 202163161523 P
(62) Divisional of application: 22714084.5
(71) Applicant: Donaldson Company, Inc., Bloomington, MN 55431 (US)
(72) Inventor: GUSTAFSON, Michael, J., Bloomington, MN 55431 (US)
(74) Representative: IPLodge bv

(57) **Abstract**

A filter housing having a tapered or angled threaded section / interface with a filter head. The angled threaded section allows for easy installation and thread engagement before a seal is created with the filter head.

## Description

### Technical Field

The present disclosure relates to liquid filter arrangements useable, for example, as lube, hydraulic, or fuel filters. In particular, this disclosure relates to a filter housing for such filter arrangements, in which the housing has a ring with an angled threaded section.

### Background

Circulating liquid systems, such as fuel, hydraulic fluids, and lubricating fluids, typically require a filter arrangement. The filter arrangement is typically positioned so that the fluids are filtered by passage through filter media positioned within the filter arrangement. Typically the filter arrangement is configured so that the componentry containing the media is a service part, i.e., the media can, periodically, be removed and be replaced.

There are two common types of liquid filter arrangements. The first, typically referred to herein as a "spin-on" type, involves a filter head installed on equipment, and a spin-on filter member or cartridge. The filter member or cartridge is often referred to as "spin-on" because the assembly including the filter media is typically secured to the filter head by threading. In spin-on arrangements, the filter media is typically secured within a shell or housing as a housing/media combination, and the entire housing/media combination, as a filter member or cartridge, is removed and replaced during servicing.

The second common type of liquid filter arrangement is referred to herein as a bowl/cartridge arrangement. With a bowl/cartridge arrangement, the filter head is again installed on the equipment. The filter media, however, is contained within a filter cartridge in a form removably positioned within a housing or shell. A housing/cartridge combination is again mounted on the filter head for use. However, during servicing, the housing is disconnected from the filter head, the media contained within the housing or shell is replaced, and the same shell or housing, with the replacement media inside, is then remounted on the filter head.

Improvements in these types of arrangements are desirable.

### Summary

According to the present disclosure, a variety of features and techniques are provided that can be implemented in liquid filter arrangements, such as a fuel filter arrangement or hydraulic or lubricant (oil) filter arrangements. The techniques are generally applicable to both spin on and bowl/cartridge filter arrangements.

In one aspect, a filter housing is provided. The filter housing comprises: (a) a surrounding wall defining an interior volume; the surrounding wall having an interior surface in communication with the interior volume and an opposite exterior surface; the housing having first and second opposite ends, and an open mouth in communication with the interior volume at the first end; (i)a longitudinal axis extending through the first and second ends of the housing; and (b) a threaded section with a threaded section first end and an opposite threaded section second end; the threaded section first end being above the threaded section second end when the housing is oriented with longitudinal axis extending vertically and the housing first end being above the housing second end; (i) the threaded section being angled at an angle relative to a line parallel to the longitudinal axis, as the threaded section extends from the threaded section first end toward the threaded section second end; (ii) the angle being at least 1 degree.

In example embodiments, the angle is angled radially outwardly from the line parallel to the longitudinal axis.

In one or more examples, the angle is angled radially inwardly from the line parallel to the longitudinal axis.

In one or more examples, the threaded section first end is next to the mouth, and the threaded section second end is spaced from the mouth.

In one or more examples, there further includes a ring positioned along the mouth; the ring having the threaded section.

In one or more examples, the ring circumscribes the exterior surface of the surrounding wall.

In one or more examples, the ring is positioned against the exterior surface of the surrounding wall.

In one or more examples, the ring is circumscribed by the surrounding wall.

In one or more examples, the ring is positioned against the interior surface of the surrounding wall.

In one or more examples, the surrounding wall is wrapped over an end of the ring.

In one or more examples, there further includes a seal member secured thereto.

In one or more examples, there further includes a recess located axially between the threaded section and the mouth, the recess holding the seal member.

In one or more examples, the ring has the recess for holding the seal member.

In one or more examples, the surrounding wall is wrapped over the first ring end and extends into the recess.

In one or more examples, there further includes a seal member positioned radially between the ring and the surrounding wall.

In one or more examples, there further includes an end plate at least partially covering the first end of the housing; the end plate having a central opening defining the open mouth.

In one or more examples, the end plate includes a spigot projecting from a remaining portion of the end plate, the spigot defining the open mouth.

In one or more examples, the spigot has the threaded section.

In one or more examples, the spigot extends axially in a direction away from a remaining portion of the filter housing.

In one or more examples, the spigot extends axially in a direction into the interior volume of the surrounding wall.

In one or more examples, the threaded section is interiorly directed.

In one or more examples, the threaded section has at least 3 threads.

In one or more examples, the threaded section has 4 or more threads.

In one or more examples, the ring angle is between 1-20 degrees.

In one or more examples, the ring angle is between 2-8 degrees.

In one or more examples, the housing is metal and the ring is non-metal.

In one or more examples, the housing and the ring comprise a polymeric material.

In one or more examples, the housing is metal and the ring is metal.

In a further aspect, a spin-on filter assembly is provided comprising a filter housing as characterized above and a filter element non-removably positioned in the interior volume.

In example embodiments, the filter element comprises: (a) a pleated section of filter media extending between a first end cap and an opposite second end cap; the first end cap being adjacent to the open mouth; (b) the first end cap having a central opening; and (c) a filter element seal member being secured to the first end cap.

In a further aspect, a bowl filter assembly is provided comprising a filter housing as characterized above and a filter cartridge removably positioned in the interior volume.

In example embodiments, the filter cartridge comprises: (a) a pleated section of filter media extending between a first end cap and an opposite second end cap; the first end cap being adjacent to the open mouth; (b) the first end cap having a central opening; and (c) a filter element seal member being secured to the first end cap.

In another aspect, a method of mounting a filter housing on a filter head is provided. The filter housing has a central longitudinal axis, and the method comprises: releasably securing a filter housing to a filter head by screwing a threaded section on the housing to the filter head until sealed against the filter head; the threaded section being angled at an angle relative to a line parallel to the longitudinal axis, as the threaded section extends from a threaded section first end toward a threaded section second end; and the angle being at least 1 degree.

In example methods, the angle is between 2-8 degrees.

In example methods, the threaded section is on a ring positioned against a surrounding wall of the filter housing.

In example methods, the ring is positioned against an exterior surface of the surrounding wall.

In example methods, the ring is positioned against an interior surface of the surrounding wall.

In example methods, the filter housing has an end plate and a spigot extending axially from the end plate; the spigot having the threaded section.

In another aspect, a filter housing is provided comprising: a surrounding wall defining an interior volume; the surrounding wall having an interior surface in communication with the interior volume and an opposite exterior surface; the housing having first and second opposite ends, and an open mouth in communication with the interior volume at the first end; and a threaded section with a first end next to the mouth and a second end spaced from the mouth; the threaded section being angled radially outwardly at an angle as the threaded section extends from the first end toward the second end; and the angle being at least 1 degree.

In example arrangements, the housing further includes a seal member secured thereto.

In one or more embodiments, the housing includes a recess located axially between the threaded section and the mouth, the recess holding the seal member.

In preferred implementations, the housing further includes a ring circumscribing the exterior surface of the surrounding wall; the ring having the threaded section. The ring has a first ring end and an opposite second ring end; the ring having the recess for holding the seal member.

In some examples, the surrounding wall is wrapped over the first ring end and extends into the recess.

For many examples, the threaded section has at least 3 threads.

For many examples, the threaded section has 4 or more threads.

In one or more embodiments, the ring angle is between 1-20 degrees.

In one or more embodiments, the ring angle is between 2-8 degrees.

In example embodiments, the ring is against the exterior surface of the surrounding wall.

For some arrangements, the housing is metal and the ring is non-metal.

For some arrangements, the housing and the ring comprise a polymeric material.

For some arrangements, the housing is metal and the ring is metal.

In a further aspect, a spin-on filter assembly comprises a filter housing as variously characterized above and a filter element non-removably positioned in the interior volume.

In one or more examples, the filter element comprises: a pleated section of filter media extending between a first end cap and an opposite second end cap; the first end cap being adjacent to the open mouth; the first end cap having a central opening; and a filter element seal member being secured to the first end cap.

In a further aspect, a bowl-filter cartridge comprises a filter housing as variously characterized above and a filter cartridge removably positioned in the interior volume.

In one or more examples, the filter cartridge comprises a pleated section of filter media extending between a first end cap and an opposite second end cap; the first end cap being adjacent to the open mouth; the first end cap having a central opening; and a filter element seal member being secured to the first end cap.

In a further aspect, a method of mounting a filter housing on a filter head is provided; the method comprising: releasably securing a filter housing to a filter head by screwing a threaded section on the housing to the filter head until a seal member secured to the housing forms a seal against the filter head; the threaded section being angled radially outwardly at an angle as the threaded section extends from a first end toward a second end; the first end being adjacent to an open mouth in the housing; and the angle being at least 1 degrees.

In some example methods, the angle is between 2-8 degrees.

There is no requirement that all of the techniques described herein be incorporated in a given system, for that system to obtain at least some advantage.

### Brief Description of the Drawings

FIG. 1 a cross-sectional view of an embodiment of a filter assembly, constructed in accordance of principles of this disclosure;
FIG. 2 is a schematic cross-sectional view of a ring and a portion of the housing of the filter assembly of FIG. 1;
FIG. 3 is a schematic cross-sectional view of the ring of FIG. 2 secured to a filter head, only a portion of the filter head being depicted;
FIG. 4 is a schematic cross-sectional view of a portion of another embodiment of a filter assembly, constructed in accordance of principles of this disclosure;
FIG. 5 is a schematic cross-sectional view of a portion of another embodiment of a filter assembly, constructed in accordance of principles of this disclosure; and
FIG. 6 is a schematic cross-sectional view of a portion of another embodiment of a filter assembly, constructed in accordance of principles of this disclosure.

### Detailed Description

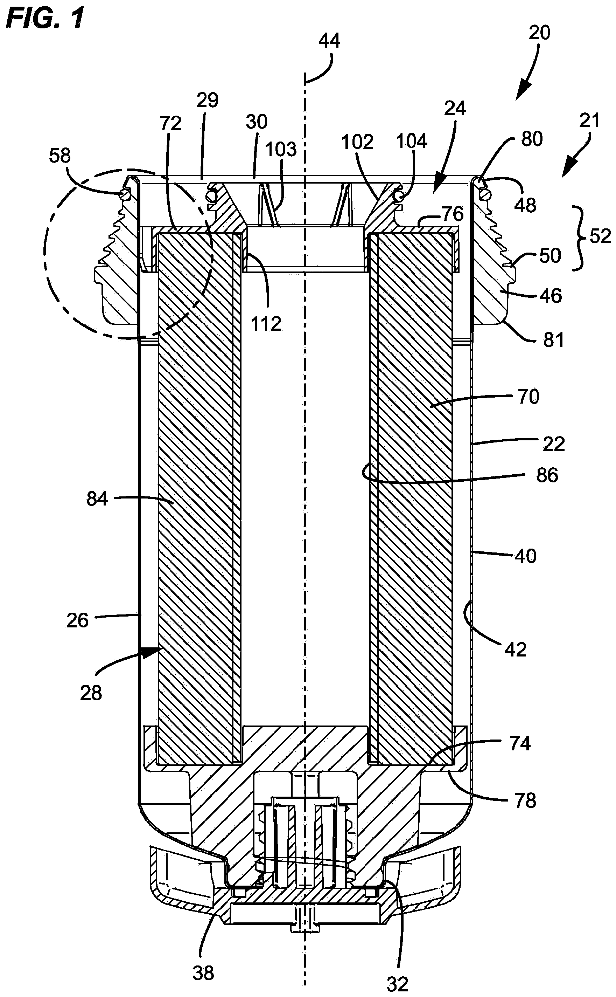

FIGS. 1-3 illustrate an example embodiment of a filter housing having a tapered or angled threaded section / interface with a filter head. The angled threaded section allows for easy installation and thread engagement before a seal is created with the filter head. This results in easy installation and an increased burst strength. The housing can be made from a thinner material than the conventional housing, resulting in less cost.

In reference now to FIG. 1, a filter assembly is shown generally at 20. The filter assembly 20 is a spin-on filter arrangement 21, in which there is a housing 22 holding a non-removable filter element 24. The filter assembly 20 could also be a bowl-cartridge assembly, by making the filter element/cartridge 24 removable and replaceable from the housing 22.

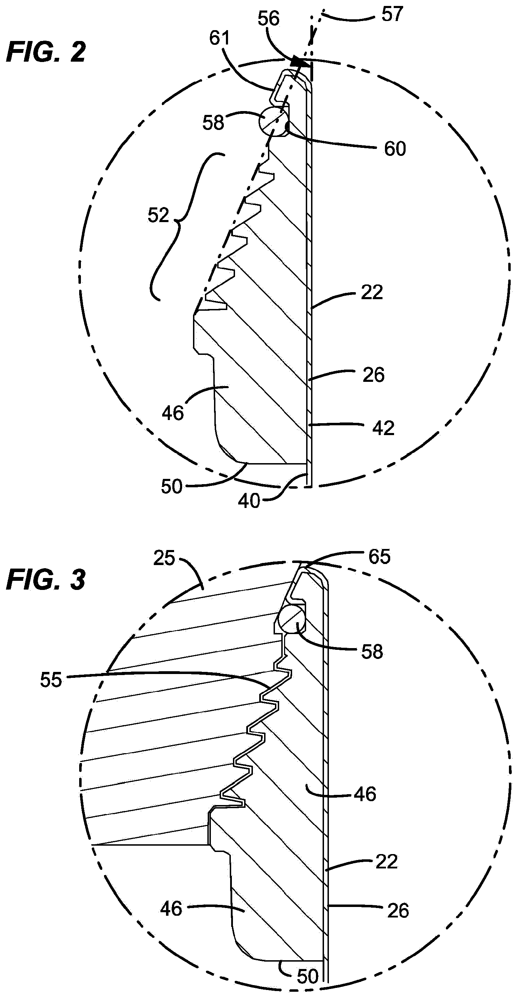

The housing 22 removably connects to a filter head 25 (FIGS. 3-6). After a period of time, the housing 22 is removed from the filter head 25. When using spin-on arrangement 21, the entire spin-on arrangement 21 is replaced with a new one and reinstalled on the filter head 25. When using a bowl-cartridge assembly, the filter cartridge 24 is removed from the housing 22, and a new filter cartridge 24 is inserted into the housing 22. The housing 22 with the new filter cartridge 24 is again reinstalled on the filter head 25.

The filter housing 22 includes a surrounding wall 26 defining an interior volume 28. The housing 26 has, at a first end 29, an open mouth 30 in communication with the internal volume 28. For a bowl filter cartridge, the cartridge 24 can be removed and replaced through the open mouth 30. The housing 22 further include a second end 32 opposite of the open mouth 30.

In some arrangements, e.g. for fuel filters, there can be a valve assembly 38 at the second end 32.

The surrounding wall 26 has an exterior surface 40 and an opposite interior surface 42. The filter housing 22 includes a longitudinal axis 24 passing through the mouth 30 at the first end 29 and second end 32. In general, the longitudinal axis 44 is parallel to a main section of the wall 26 of the housing 22. When the housing 22 is oriented with the longitudinal axis 44 extending vertically, the housing first end 29 is positioned vertically above the housing second end 32.

The filter housing 22 includes a threaded section 52. The threaded section 52 includes a plurality of threads 54 constructed and arranged to threadably connect with appropriately shaped threads 55 (FIG. 3) on the filter head 25. Preferably, there are at least three threads, and in many cases, four or more threads. The threads 54 can include a variety of thread shapes such as: buttress, modified buttress, UN, acme, stub acme, trapezoidal, V, square, knuckle, Whitworth, American Pipe, British Pipe, metric parallel, metric tapered, etc.

The threaded section 52 can form part of the surrounding wall 26, or it may be on other parts of the assembly, as explained further.

The threaded section 52 has a threaded section first end 48 and an opposite threaded section second end 50. The threaded section first end 48 is positioned above the threaded section second end 50 when the housing 22 is oriented with the longitudinal axis 44 extending vertically and the housing first end 29 being above the housing second end 32.

In preferred embodiments, and in accordance with principles of this disclosure, the threaded section 52 is angled at an angle 56 relative to a line parallel to the longitudinal axis 44, as the threaded section 52 extends from the threaded section first end 48 toward the threaded section second end 50. The angle 56 is non-zero, acute, and at least 1 degree. In FIG. 2, the line 57 is along the threaded section 52 and intersects the longitudinal axis 44. The angle 56 can be at least 1°, for example no greater than 20°, and preferably between 2-8°.

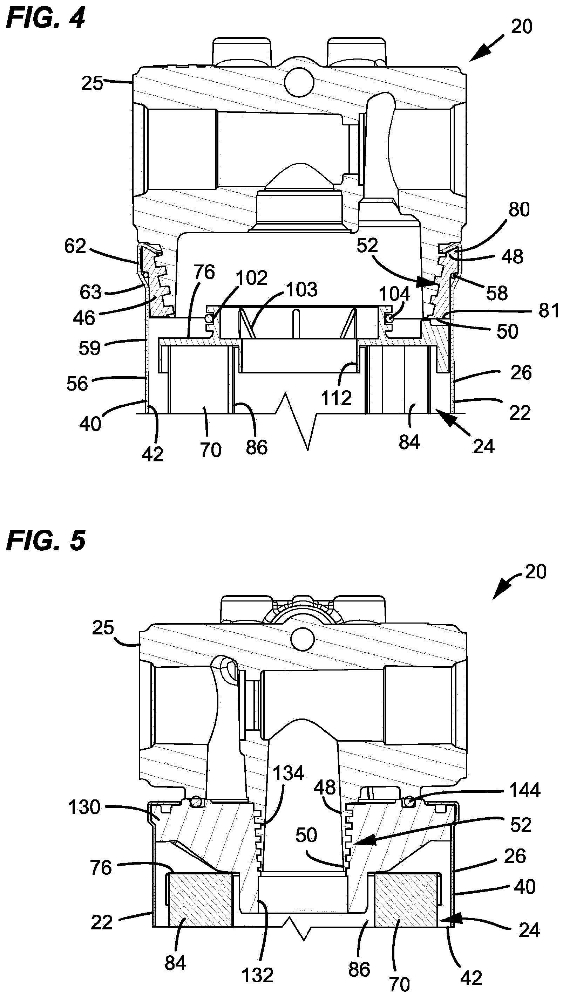

Various embodiments are possible. In some embodiments, e.g. FIG. 3, the angle 56 is angled radially outwardly from the line parallel to the longitudinal axis 44. In some embodiments, e.g. FIGS. 4-6, the angle 56 is angled radially inwardly from the line parallel to the longitudinal axis 44.

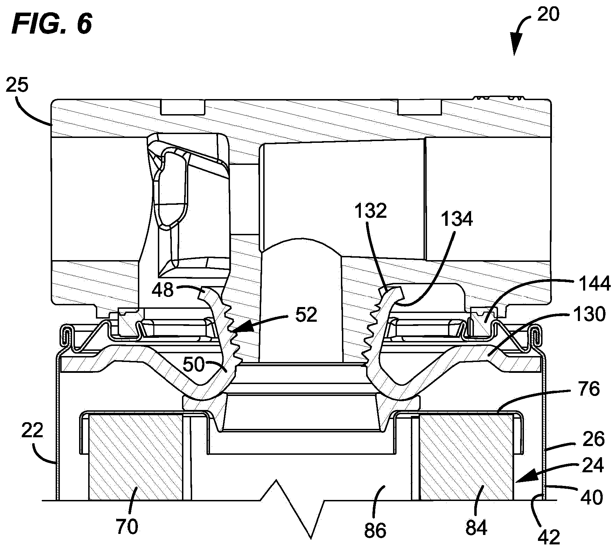

In some embodiments, e.g. FIGS. 1-5, the threaded section first end 48 is next to the mouth 30, and the threaded section second end 50 is spaced from the mouth 30. In other embodiments, e.g. FIG. 6, the threaded section second end 50 is next to the mouth 30, and the threaded section first end 48 is spaced away from the mouth 30.

In some embodiments, the filter housing 22 can include a ring 46. The ring 46 can be made from a variety of materials including non-metal, such as a polymeric material such as plastic. In some examples, the ring 46 can also be made from metal. The ring 46 can be positioned along the mouth 30.

In the embodiment of FIGS. 1-3, the ring 46 circumscribes the exterior surface 40 of the surrounding wall 26. In some embodiments, ring 46 can be positioned to be directly against the exterior surface 40 of the surrounding wall 26.

In the embodiment of FIG. 4, the ring 46 is circumscribed by the interior surface 42 of the surrounding wall 26, and can be positioned directly against the interior surface 42 of the surrounding wall 26.

The ring 46 has a first ring end 80 and an opposite second ring end 81. In some example embodiments (FIGS. 1-4), the first ring end 80 is next to or adjacent the mouth 30, with the second ring end 81 spaced away from the mouth 30. For example, the second ring end 81 can be spaced along the wall 26 between the first ring end 80 and the second end 32 of the housing 22.

Between the first ring end 80 and second ring end 81 is the threaded section 52.

The threaded section 52 is angled outwardly the angle 56 (FIG. 2), as the threaded section 52 extends from the first ring end 80 toward the second ring end 81.

In accordance with principles of this disclosure, the filter housing 22 can include a seal member 58. This may be embodied in a variety of implementations.

In the example shown in FIGS. 1-3, the ring 46 includes a recess 60 located axially between the threaded section 52 and the mouth 30, in which the seal member 58 is located in and held within the recess 60.

The housing surrounding wall 56 is secured to the ring 46. In one example, the surrounding wall 56 is wrapped over the first ring end 80; see FIGS. 2 and 4. In the embodiment of FIG. 2, the surrounding wall 56 is folded into or extending into the recess 60 to help lock the wall 26 to the ring 46 with folded section 61. Many different connection mechanisms are possible, including the use of adhesive.

In the embodiment of FIG. 4, the seal member 58 is positioned radially between the ring 46 and the surrounding wall 56. In the FIG. 4 embodiment, the surrounding wall 56 has a first diameter region 59 and a second diameter region 62. The second diameter region 62 is larger in diameter than the first diameter region 59. The second diameter region 62 is along the open mouth 30 and includes the portion of the surrounding wall 56 that is wrapped over the first ring end 80. The transition or bend 63 between the first diameter region 59 and the second diameter region 62 is positioned the seal member 58 between and against the interior surface 42 of the surrounding wall 56 and the ring 46.

In some embodiments, the filter housing 22 can further include an end plate 130. In FIGS. 5 and 6, the end plate 130 at least partially covers the first end 29 of the housing 22. The end plate 130 can have a central opening 132 defining the open mouth 30.

The end plate 130 may include a spigot 134. The spigot 134 projects from a remaining portion of the end plate 130 and defines the open mouth 30.

In the embodiment of FIG. 5, the spigot 134 extends axially in a direction way from a remaining portion of the filter housing 22. In the embodiment of FIG. 6, the spigot 134 extends axially in a direction into the interior volume 28 of the surrounding wall 56.

The spigot 134 can include the threaded section 52. The threaded section 52 can be either radially outwardly (i.e., exteriorly) directed, or as shown in FIGS. 5 and 6, the threaded section 52 can be radially inwardly (i.e., interiorly) directed.

In some examples the housing 22 can be made of metal, while in other examples, the housing 22 can be made of non-metal, including a polymeric material, such as plastic. The housing wall 26 can be made thinner than the conventional, prior art housing because of the thread angle 56. The thread angle 56 allows for a stronger connection between the housing 22 and the filter head 25, such that the threaded section 52 can sustain more load than filters using conventional threads.

In addition, because of the thread angle 56, the threads 54 slide past each other before making contact, which reduces a connection problem of crossing threads. To secure the threaded section 52 to the head 25, only a few rotations of the housing 22 to the head 25 will be needed, such 3 or fewer rotations.

The filter element or cartridge 24 is positioned in the interior volume 28 of the housing 22. The filter cartridge 24 includes a media pack 70 having a first end region 72 and an opposite second end region 74.

A first end cap 76 is secured to the first end region 72. A second end cap 78 is secured to the second end region 74.

While many embodiments are possible, in the example shown, the media pack 70 comprises a cylinder of pleated media 84 having an open filter interior 86.

In FIGS. 1 and 4, the first end cap 76 includes a seal holder 102 projecting axially from the first end cap 76 and holding a seal member 104 to form an outwardly directed radial seal. The outwardly directed radial seal is formed with a properly placed filter head. Many embodiments are possible. For example, in other embodiments, the seal member 104 could be inwardly directed. The seal holder 102 is supported by gussets 103 along an inner radial portion of the seal holder 102.

In the example embodiments of FIGS. 1-6, the first end cap 76 has an open center at 112. The second end cap 78 is closed.

In the embodiment of FIG. 6, there is a seal member or gasket 140 between an upper part of the first end cap 76 and an inward facing portion of the end plate 130.

The end plate 130 of FIGS. 5 and 6 can include a face seal 144. The face seal 144 is held by the end plate 130 such that it faces axially away from a remaining portion of the filter element or cartridge 24. The face seal 144 is positioned to form a seal with the filter head 25, when the cartridge 24 is connected to the filter head 25.

The above assemblies can be used in a method of mounting a filter housing onto a filter head. The method can include releasably securing the filter housing 22 to the filter head 25 by screwing the threaded section 52 on the housing 22 to the filter head 25 until the seal member 58 secured to the housing 22 forms a seal 65 (FIG. 3) against the filter head 25. The threaded section 52 is angled radially outwardly at angle 56, as the threaded section 52 extends from the first end 48 towards the second end 50. The angle 56 can be at least 1°, not more than 20°, typically 2-8°.

In example methods, the threaded section 52 is on ring 46 positioned against the surrounding wall 56 of the filter housing 22. In examples, the ring 46 is positioned against exterior surface 40 of the surrounding wall 56. In other examples, the ring 46 is positioned against the interior surface 42 of the surrounding wall 56.

In example methods, the filter housing 22 has end plate 130 and spigot 134 extending axially from the end plate 130, in which the spigot 134 has the threaded section 52.

The above represents example principles. Many embodiments can be made using these principles.

### What could be claimed is:

1. A filter housing comprising:
   (a) a surrounding wall defining an interior volume; the surrounding wall having an interior surface in communication with the interior volume and an opposite exterior surface; the housing having first and second opposite ends, and an open mouth in communication with the interior volume at the first end;
      (i) a longitudinal axis extending through the first and second ends of the housing; and
   (b) a threaded section with a threaded section first end and an opposite threaded section second end; the threaded section first end being above the threaded section second end when the housing is oriented with longitudinal axis extending vertically and the housing first end being above the housing second end;
      (i) the threaded section being angled at an angle relative to a line parallel to the longitudinal axis, as the threaded section extends from the threaded section first end toward the threaded section second end;
      (ii) the angle being at least 1 degree.
2. The filter housing of item 1 wherein the angle is angled radially outwardly from the line parallel to the longitudinal axis.
3. The filter housing of item 1 wherein the angle is angled radially inwardly from the line parallel to the longitudinal axis.
4. The filter housing of item 1 wherein the threaded section first end is next to the mouth, and the threaded section second end is spaced from the mouth.
5. The filter housing of item 4 further including a ring positioned along the mouth; the ring having the threaded section.
6. The filter housing of item 5 wherein the ring circumscribes the exterior surface of the surrounding wall.
7. The filter housing of item 6 wherein the ring is positioned against the exterior surface of the surrounding wall.
8. The filter housing of item 5 wherein the ring is circumscribed by the surrounding wall.
9. The filter housing of item 8 wherein the ring is positioned against the interior surface of the surrounding wall.
10. The filter housing of any one of items 5-9 wherein the surrounding wall is wrapped over an end of the ring.
11. The filter housing of any one of items 1-10 further including a seal member secured thereto.
12. The filter housing of item 11 further including a recess located axially between the threaded section and the mouth, the recess holding the seal member.
13. The filter housing of item 6 and any one of items 11-12 wherein the ring has the recess for holding the seal member.
14. The filter housing of item 13 wherein the surrounding wall is wrapped over the first ring end and extends into the recess.
15. The filter housing of any one of items 8 and 9 further including a seal member positioned radially between the ring and the surrounding wall.
16. The filter housing of any one of items 1 and 3 further including an end plate at least partially covering the first end of the housing; the end plate having a central opening defining the open mouth.
17. The filter housing of item 16 wherein the end plate includes a spigot projecting from a remaining portion of the end plate, the spigot defining the open mouth.
18. The filter housing of item 17 wherein the spigot has the threaded section.
19. The filter housing of item 18 wherein the spigot extends axially in a direction away from a remaining portion of the filter housing.
20. The filter housing of item 18 wherein the spigot extends axially in a direction into the interior volume of the surrounding wall.
21. The filter housing of any one of items 17-20 wherein the threaded section is interiorly directed.
22. The filter housing of any one of items 1-21 wherein the threaded section has at least 3 threads.
23. The filter housing of any one of items 1-22 wherein the threaded section has 4 or more threads.
24. The filter housing of any one of items 1-23 wherein the ring angle is between 1-20 degrees.
25. The filter housing of any one of items 1-23 wherein the ring angle is between 2-8 degrees
26. The filter housing of any one of items 5-10, and any other item, wherein the housing is metal and the ring is non-metal.
27. The filter housing of any one of items 5-10, and any other item, wherein the housing and the ring comprise a polymeric material.
28. The filter housing of any one of items 5-10, and any other item, wherein the housing is metal and the ring is metal.
29. A spin-on filter assembly comprising a filter housing of any one of items 1-28 and a filter element non-removably positioned in the interior volume.
30. The spin-on filter assembly of item 29 wherein the filter element comprises:
   (a) a pleated section of filter media extending between a first end cap and an opposite second end cap; the first end cap being adjacent to the open mouth;
   (b) the first end cap having a central opening; and
   (c) a filter element seal member being secured to the first end cap.
31. A bowl filter assembly comprising a filter housing of any one of items 1-28 and a filter cartridge removably positioned in the interior volume.
32. The bowl filter assembly of item 31 wherein the filter cartridge comprises:
   (a) a pleated section of filter media extending between a first end cap and an opposite second end cap; the first end cap being adjacent to the open mouth;
   (b) the first end cap having a central opening; and
   (c) a filter element seal member being secured to the first end cap.
33. A method of mounting a filter housing on a filter head; the filter housing having a central longitudinal axis; the method comprising:
   (a) releasably securing a filter housing to a filter head by screwing a threaded section on the housing to the filter head until sealed against the filter head;
      (i) the threaded section being angled at an angle relative to a line parallel to the longitudinal axis, as the threaded section extends from a threaded section first end toward a threaded section second end; and
      (ii) the angle being at least 1 degree.
34. The method of item 33 wherein the angle is between 2-8 degrees.
35. The method of any one of items 33 and 34 wherein the threaded section is on a ring positioned against a surrounding wall of the filter housing.
36. The method of item 35 wherein the ring is positioned against an exterior surface of the surrounding wall.
37. The method of item 35 wherein the ring is positioned against an interior surface of the surrounding wall.
38. The method of any one of items 33 and 34 wherein the filter housing has an end plate and a spigot extending axially from the end plate; the spigot having the threaded section.
39. A filter housing comprising:
   (a) a surrounding wall defining an interior volume; the surrounding wall having an interior surface in communication with the interior volume and an opposite exterior surface; the housing having first and second opposite ends, and an open mouth in communication with the interior volume at the first end; and
   (b) a threaded section with a first end next to the mouth and a second end spaced from the mouth;
      (i) the threaded section being angled radially outwardly at an angle as the threaded section extends from the first end toward the second end;
      (ii) the angle being at least 1 degree.
40. The filter housing of item 39 further including a seal member secured thereto.
41. The filter housing of item 40 further including a recess located axially between the threaded section and the mouth, the recess holding the seal member.
42. The filter housing of item 41 further including a sleeve circumscribing the exterior surface of the surrounding wall; the sleeve having the threaded section; the sleeve having a first sleeve end and an opposite second sleeve end; the sleeve having the recess for holding the seal member.
43. The filter housing of item 42 wherein the surrounding wall is wrapped over the first sleeve end and extends into the recess.
44. The filter housing of any one of items 39-43 wherein the threaded section has at least 3 threads.
45. The filter housing of any one of items 39-44 wherein the threaded section has 4 or more threads.
46. The filter housing of any one of items 39-45 wherein the sleeve angle is between 1-20 degrees.
47. The filter housing of any one of items 39-46 wherein the sleeve angle is between 2-8 degrees
48. The filter housing of item 42, and any one of items 39-47 wherein the housing is metal and the sleeve is non-metal.
49. The filter housing of item 42, and any one of items 39-47 wherein the housing and the sleeve comprise a polymeric material.
50. The filter housing of item 42, and any one of items 39-47 wherein the housing is metal and the sleeve is metal.
51. A spin-on filter assembly comprising a filter housing of any one of items 39-50 and a filter element non-removably positioned in the interior volume.
52. The spin-on filter assembly of item 51 wherein the filter element comprises:
   (a) a pleated section of filter media extending between a first end cap and an opposite second end cap; the first end cap being adjacent to the open mouth;
   (b) the first end cap having a central opening; and
   (c) a filter element seal member being secured to the first end cap.
53. A bowl filter assembly comprising a filter housing of any one of items 39-50 and a filter cartridge removably positioned in the interior volume.
54. The bowl filter assembly of item 53 wherein the filter cartridge comprises:
   (a) a pleated section of filter media extending between a first end cap and an opposite second end cap; the first end cap being adjacent to the open mouth;
   (b) the first end cap having a central opening; and
   (c) a filter element seal member being secured to the first end cap.
55. A method of mounting a filter housing on a filter head; the method comprising:
   (a) releasably securing a filter housing to a filter head by screwing a threaded section on the housing to the filter head until a seal member secured to the housing forms a seal against the filter head;
      (i) the threaded section being angled radially outwardly at an angle as the threaded section extends from a first end toward a second end; the first end being adjacent to an open mouth in the housing; and
      (ii) the angle being at least 1 degree.
56. The method of item 55 wherein the angle is between 2-8 degrees.

## Claims

1. A filter housing comprising:
(a) a surrounding wall defining an interior volume; the surrounding wall having an interior surface in communication with the interior volume and an opposite exterior surface; the housing having first and second opposite ends, and an open mouth in communication with the interior volume at the first end;
(i) a longitudinal axis extending through the first and second ends of the housing; and
(b) a threaded section with a threaded section first end and an opposite threaded section second end; the threaded section first end being above the threaded section second end when the housing is oriented with longitudinal axis extending vertically and the housing first end being above the housing second end;
(i) the threaded section being angled at an angle relative to a line parallel to the longitudinal axis, as the threaded section extends from the threaded section first end toward the threaded section second end;
(ii) the angle being at least 1 degree and angled radially inwardly from the line parallel to the longitudinal axis; and
(c) a seal member secured thereto.

2. The filter housing of claim 1, wherein the threaded section first end is next to the mouth, and the threaded section second end is spaced from the mouth.

3. The filter housing of claim 2, further including a ring positioned along the mouth; the ring having the threaded section.

4. The filter housing of claim 3, wherein the ring is circumscribed by the surrounding wall.

5. The filter housing of claim 4, wherein the ring is positioned against the interior surface of the surrounding wall.

6. The filter housing of any one of claims 3-5, wherein the surrounding wall is wrapped over an end of the ring.

7. The filter housing of any one of claims 4 and 5, wherein the seal member is positioned radially between the ring and the surrounding wall.

8. The filter housing of any one of claims 1-7, wherein the threaded section has 4 or more threads.

9. The filter housing of any one of claims 1-8, wherein the ring angle is between 2-8 degrees

10. The filter housing of any one of claims 3-6, and any other claim, wherein the housing is metal and the ring is non-metal.

11. The filter housing of any one of claims 3-6, and any other claim, wherein the housing and the ring comprise a polymeric material.

12. A spin-on filter assembly comprising a filter housing of any one of claims 1-11 and a filter element non-removably positioned in the interior volume.

13. The spin-on filter assembly of claim 12, wherein the filter element comprises:
(a) a pleated section of filter media extending between a first end cap and an opposite second end cap; the first end cap being adjacent to the open mouth;
(b) the first end cap having a central opening; and
(c) a filter element seal member being secured to the first end cap.

14. A bowl filter assembly comprising a filter housing of any one of claims 1-11 and a filter cartridge removably positioned in the interior volume.

15. The bowl filter assembly of claim 14, wherein the filter cartridge comprises:
(a) a pleated section of filter media extending between a first end cap and an opposite second end cap; the first end cap being adjacent to the open mouth;
(b) the first end cap having a central opening; and
(c) a filter element seal member being secured to the first end cap.
